Europäisches Patentamt

European Patent Office

Office européen des brevets

(19)

(11) Numéro de publication : **0 504 047 A1**

# (12) DEMANDE DE BREVET EUROPEEN

(21) Numéro de dépôt : **92400636.4**

(22) Date de dépôt : **11.03.92**

(51) Int. Cl.$^5$ : **G05D 1/03**

(30) Priorité : **13.03.91 FR 9103023**

(43) Date de publication de la demande :
**16.09.92 Bulletin 92/38**

(84) Etats contractants désignés :
**CH DE ES GB IT LI SE**

(71) Demandeur : **COMMISSARIAT A L'ENERGIE ATOMIQUE**
**31-33, rue de la Fédération**
**F-75015 Paris (FR)**

(72) Inventeur : **Gelin, Rodolph**
**295 rue Saint Jacques**
**F-75005 Paris (FR)**

(74) Mandataire : **Mongrédien, André et al**
**c/o BREVATOME 25, rue de Ponthieu**
**F-75008 Paris (FR)**

(54) Installation et procédé de guidage d'un véhicule sur une trajectoire.

(57) Installation et procédé de guidage d'un robot (1) sur une trajectoire T à l'aide d'aimants de deux sortes dont certains (N) matérialisent la trajectoire alors que d'autres (S), qui sont placés un peu à côté de la trajectoire et permettent de diminuer sensiblement le nombre des précédents, ont pour fonction d'annoncer les changements de courbure de la trajectoire.

EP 0 504 047 A1

La présente invention concerne une installation et un procédé de guidage d'un véhicule sur une trajectoire.

Une conception déjà relativement ancienne consiste à matérialiser une trajectoire qu'un véhicule tel qu'un robot est censé suivre par un fil parcouru par un courant alternatif et émetteur d'un champ magnétique. Une batterie de capteurs de champ magnétique est disposée sur le véhicule suivant une rangée transversale et indique à tout instant la position latérale du véhicule par rapport au fil en fonction du profil magnétique obtenu et en particulier de l'emplacement du capteur qui mesure le champ le plus intense. De nombreux brevets reposent sur cette conception ainsi que sur la conception équivalente qui utilise une bande peinte sur le sol à la place du fil.

On estima ensuite que de tels repères continus se prêtaient trop mal à des modifications de la trajectoire et étaient de toute manière coûteux à installer, et on découvrit que la trajectoire pouvait être matérialisée par des balises, c'est-à-dire des repères ponctuels, espacés sur la trajectoire, et le fil fut en conséquence remplacé par des aimants permanents. Le brevet américain 4 847 774 exprime une première réalisation de cette idée, et le brevet européen 0 278 853 une autre, qui est plus intéressante car l'installation est enrichie de balises supplémentaires qui dirigent le véhicule et lui font parcourir par exemple des portions particulières de la trajectoire, tels que des virages, sans cependant les guider directement : ces portions de trajectoire sont situées en avant des balises supplémentaires et ne sont aucunement matérialisées.

On peut toutefois reprocher à cette installation une relative lourdeur car les balises supplémentaires fournissent des messages codés qu'il faut déchiffrer et doivent être placées suivant des chapelets qui présentent tous la même répartition de balises et doivent être disposés avec une certaine précision. La présente invention peut être considérée comme une amélioration : aucun code n'est déchiffré par le système de pilotage du véhicule, et les balises employées sont peu nombreuses et très simples. Elles peuvent être placées assez librement le long de la trajectoire car elles sont formées d'éléments isolés au lieu d'être regroupés en chapelets : il n'y a donc pas de règle fixe pour régir leur écartement, qui ne dépend que de la précision du guidage souhaitable à chaque portion de la trajectoire.

L'installation comporte, outre des balises espacées sur la trajectoire et qui servent à la matérialiser comme on le faisait déjà selon l'art antérieur, des balises d'un autre genre de part et d'autre de la trajectoire ; ces autres balises sont placées devant des portions de changements de rayon de courbure de la trajectoire et indiquent en fait au véhicule l'imminence de ces changements.

Il convient simplement que le véhicule ne confonde pas les deux genres de balises, ce qui peut être évité si par exemple les balises espacées sur la trajectoire sont des aimants Nord et les balises de part et d'autre de la trajectoire des aimants Sud, ou vice-versa.

Un procédé pratique d'exploitation de telles installations consiste à obliger le véhicule à suivre des portions de cercle dont les rayons de courbure appartiennent à une gamme définie à l'avance et qui comporte un nombre fini de valeurs. Chaque balise située de part et d'autre de la trajectoire commande d'interrompre la portion de cercle actuellement parcourue et de suivre dorénavant une portion de cercle dont le rayon de courbure est voisin dans la gamme. La position latérale de la balise permet de choisir entre le rayon de courbure immédiatement supérieur et le rayon de courbure immédiatement inférieur. Une succession de balises a un effet cumulatif et fait parcourir au véhicule sensiblement une portion de spirale.

La trajectoire est parcourue avec une meilleure précision si les changements de rayon de courbure sont effectués à des emplacements bien déterminés, comme à l'emplacement de la balise suivante qui est située sur la trajectoire, ou encore s'ils sont effectués quand le véhicule a pris une orientation appartenant à une gamme définie à l'avance. Le changement de courbure est dans ces deux cas consécutif et non simultané au repérage de la balise à l'écart de la trajectoire.

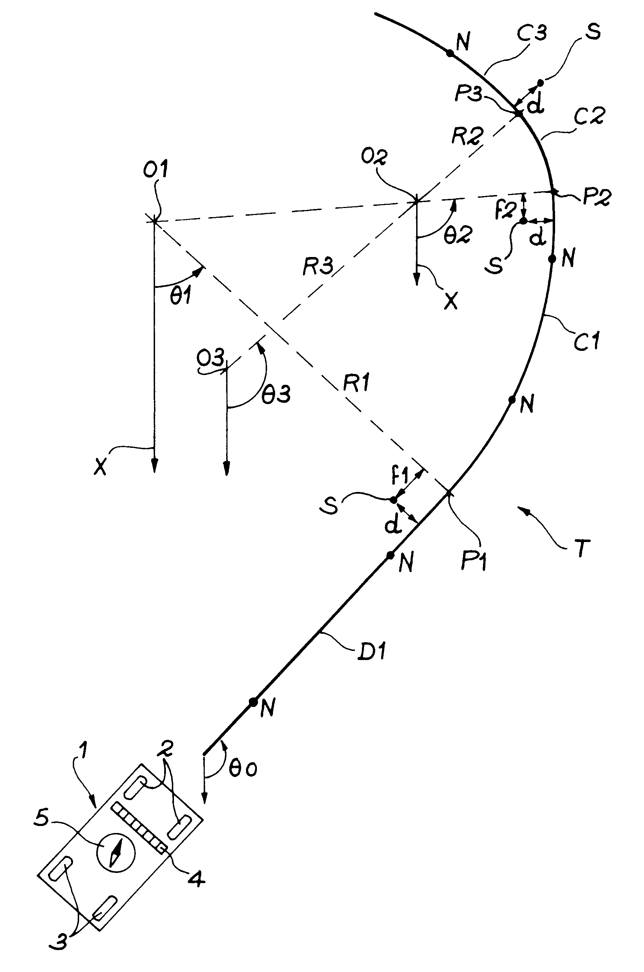

On va maintenant passer aux commentaires de la figure unique annexée à titre illustratif et non limitatif qui représente une mise en oeuvre de l'invention.

Le véhicule est un robot 1 pourvu en particulier de roues avant 2 et arrière 3 ainsi que d'une rangée transversale de détecteurs de champ magnétique 4 et d'un capteur de cap 5 qui peut être une boussole ou un gyroscope. Le robot 1 est bien entendu pourvu de moyens informatiques, non représentés, qui recueillent les informations provenant des détecteurs de champ magnétique 4 du capteur de cap 5 et qui dirigent le robot 1.

Le robot 1 est astreint à parcourir une trajectoire T dont une portion est représentée. Elle se compose d'une succession de tronçons qui peuvent être droits ou circulaires : on a ainsi représenté successivement un segment D1, un arc de cercle de rayon R1, un second arc de cercle C2 de rayon R2, et un troisième arc de cercle C3 de rayon R3 égal à R1. Les trois arcs de cercle ont des centres respectifs 01, 02 et 03, et ils commencent à des points P1, P2 et P3 de coordonnées angulaires $\theta$1, $\theta$2 et $\theta$3 respectivement, ces coordonnées étant en fait les angles que font les rayons menant à leur point de départ P avec une direction d'origine X. Le segment D1 fait un angle $\theta$O avec cette même direction d'origine X.

La trajectoire T est matérialisée par des aimants permanents de polarité Nord repérés sur la figure par des points N. Ils sont tous identiques, isolés et relativement espacés les uns des autres, mais pas nécessairement à des distances uniformes. Ils servent à vérifier que le robot 1 suit effectivement la trajectoire T. Comme il est bien connu, le détecteur de champ magnétique 4 qui est situé à leur verticale détecte un champ magnétique plus élevé que les autres et fournit donc un signal plus important. On peut ainsi en déduire la position latérale du robot 1 par rapport à l'aimant Nord considéré. Deux comparaisons sur deux aimants Nord successifs permettent également de déduire la direction suivie par le robot 1, de corriger les déviations de cette direction par rapport à la trajectoire T et éventuellement, dans le cas où le tronçon parcouru est un segment, de corriger les erreurs dues à la dérive du capteur de cap 5 si la direction du segment parcouru est connue à l'avance, ce qui se produit notamment si la trajectoire T ne comporte que des segments prenant un nombre fini de directions déterminées. Ces procédés ont été exposés dans plusieurs brevets déjà publiés et ne seront pas décrits à nouveau ici. On signalera simplement le brevet français 89 17105, car la famille de procédés qui y est décrite conduit à un recalage particulièrement rapide.

Le tronçon de trajectoire T qui suit immédiatement celui qui est parcouru par le robot 1 est annoncé par un aimant permanent de polarité Sud, repéré par un point S, un peu avant le raccordement, ou à l'emplacement du raccordement. L'aimant Sud est situé selon le cas à gauche ou à droite de la trajectoire T. Il agit comme les aimants de polarité Nord sur les détecteurs 4, mais les champs magnétiques,qu'il produit provoquent des signaux de sens opposés dans les détecteurs 4 (par exemple des courants électriques opposés s'ils sont à effet Hall), et les signaux sont évidemment plus importants du côté de l'aimant Sud considéré, et non au centre de la rangée transversale. Ces particularités permettent de distinguer sans ambiguïté les aimants Sud des aimants Nord, ainsi que de quel côté de la trajectoire T ils se trouvent.

Les aimants Sud servent avant tout à infléchir le parcours du robot 1, qui est incité par le programme qui le dirige à virer vers les aimants Sud qu'il rencontre successivement. Comme en outre le robot 1 est programmé pour ne parcourir que des tronçons ayant un rayon de courbure en nombre fini et qui appartiennent à une gamme établie à l'avance, la trajectoire T est ainsi parfaitement définie. Si par exemple les roues avant 2 sont directrices, cette condition est satisfaite en ne les autorisant à prendre que des directions de braquage déterminées. Si les roues avant 2 sont motrices indépendamment mais pas directrices, elles seront astreintes à rouler à des rapports de vitesses déterminés pour obtenir le même résultat.

Il convient de remarquer que la connaissance des rayons des portions de cercle parcourues rend possible le recalage sur ces cercles conformément à l'enseignement du brevet français cité précédemment, car la position du centre d'un quelconque de ces cercles peut être calculée par le robot 1 dès qu'il a survolé deux aimants Nord, à l'aide de la valeur du rayon et des positions de ces deux aimants évaluées par des capteurs de déplacement montés sur le robot 1, éventuellement corrigées par des localisations d'autres balises dont la position dans l'environnement où le robot 1 se déplace est connue, ou par d'autres moyens.

Dans la situation représentée, l'aimant Sud à l'extrémité du segment D1 (de rayon de courbure infini) amène le robot 1 à accomplir un virage à gauche dont le rayon de courbure (R1) est le plus grand parmi la liste disponible, et il parcourt ainsi l'arc de cercle C1. L'aimant Sud au bout de celui-ci, qui est à la gauche de la trajectoire T, amène le robot 1 à virer davantage à gauche, c'est-à-dire à serrer son virage selon le rayon de courbure immédiatement disponible dans la gamme, soit R2. D'autres aimants Sud situés à gauche de la trajectoire T provoqueraient ainsi un virage à gauche de plus en plus serré et éventuellement un mouvement en spirale. Toutefois, on a représenté un aimant Sud à droite de la trajectoire T au bout de l'arc de cercle C2, si bien que l'arc de cercle suivant C3 équivaut à une atténuation du virage et à un tronçon comprenant le rayon de courbure disponible immédiatement supérieur à R2, c'est-à-dire R3, qui est égal à R1 comme on l'a signalé. Des aimants Sud placés successivement le long de la trajectoire et à droite permettraient ainsi tout d'abord de parcourir un segment, puis d'effectuer un virage à droite de plus en plus serré suivant le même principe que précédemment.

Les tronçons sont en général parcourus à une vitesse constante. On doit cependant souvent ralentir en réduisant le rayon de courbure du tronçon parcouru, ce qui doit être préparé avant de parcourir ce tronçon. C'est pourquoi les aimants Sud au bout des tronçons D1 et C1, qui commandent des réductions du rayon de courbure, sont placés un peu avant les raccordements, à des distances de freinage f1 et f2 qui sont choisies pour permettre au robot 1 de freiner suffisamment avant d'atteindre le tronçon suivant. La position des points de raccordement P1 à P3 peut éventuellement être matérialisée par un aimant Nord supplémentaire ou, comme on l'a représenté ici, ne pas être matérialisée. Les distances de freinage f1 et f2 sont alors imposées en fonction du temps que le robot 1 met pour décélérer de sa vitesse initiale à la vitesse prescrite pour parcourir le tronçon suivant en fonction d'une décélération prédéterminée ; ce temps est augmenté éventuellement des temps de réaction du système de pilotage. Le changement de rayon de courbure est commandé dès que le robot 1 a atteint la vitesse admissible pour parcourir le tronçon à rayon de courbure réduit.

Ces précautions sont inutiles quand le rayon de courbure devient plus grand, si bien que l'aimant Sud à l'extrémité de l'arc de cercle C2 est situé juste à la hauteur du raccordement. Le changement de rayon de courbure est instantané et le robot 1 a le loisir d'accélérer au début du troisième arc de cercle C3.

Les risques de déviation de la position du robot 1 par rapport à la trajectoire souhaitée T apparaissent cependant à tout virage.

C'est pourquoi il est conseillé, dans la mesure du possible, de n'utiliser que des segments D dont l'orientation comporte un nombre fini de valeurs déterminées à l'avance et connues du robot 1 (telles que θ0) et de ne prévoir de raccordement entre tronçons qu'à des orientations également déterminées du robot 1. Ces orientations peuvent être au nombre de quelques dizaines, uniformément réparties sur un tour complet. Le robot 1 est astreint à ne changer de rayon de courbure que quand il a atteint une des orientations prédéterminées, ce qui l'empêche en particulier de démarrer sur un segment tel que D1 avec une mauvaise orientation qui pourrait facilement l'égarer. On s'affranchit ainsi des erreurs dues à l'imprécision des estimations des points de raccordement P1 à P3 consécutives notamment à l'imprécision des distances de freinage f1 et f2, et les risques d'égarer le robot 1 sont considérablement réduits.

Des essais menés en pratique ont montré que le robot 1 dérivait légèrement de la trajectoire T souhaitée aux virages, mais seulement d'écarts parfaitement admissibles, et revenait rapidement sur la trajectoire souhaitée en parcourant les segments. Comme ceux-ci sont à peu près toujours les plus nombreux en pratique, on peut conclure que l'invention donne satisfaction en ce qui concerne la qualité du guidage tout en permettant d'arriver au but souhaité : la possibilité de modifier aisément la trajectoire T en combinaison avec la simplicité des principes de programmation.

Il faut ajouter que les aimants Sud sont favorablement à une distance latérale d de la trajectoire T qui est uniforme et déterminée, si bien que les aimants Sud peuvent assurer le rôle de recalage sur la trajectoire T que les aimants Nord jouent également. Il n'y a pas de différence de principe dans les calculs. Il faut simplement effectuer une correction d'estimation de la position latérale du robot 1 pour tenir compte de la distance latérale d.

toire.

2. Installation suivant la revendication 1, caractérisée en ce que les balises sont des aimants permanents, les balises sur la trajectoire ayant une polarité opposée à celle des balises situées de part et d'autre de la trajectoire.

3. Procédé de guidage d'un véhicule sur une trajectoire complétée par une installation de guidage conforme à l'une quelconque des revendications 1 ou 2, caractérisé en ce que le véhicule évolue sur la trajectoire en parcourant des portions de cercle (C) de rayon de courbure (R) différents et appartenant à une gamme définie à l'avance et comportant un nombre fini de valeurs, et en ce que les balises (S) situées de part et d'autre de la trajectoire commandent au véhicule de suivre des portions de cercle ayant un rayon de courbure voisin dans la gamme au rayon de courbure des portions de cercle parcourues quand lesdites balises situées de part et d'autre de la trajectoire furent repérées.

4. Procédé de guidage d'un véhicule suivant la revendication 3, caractérisé en ce que les changements de rayon de courbure des portions de cercle parcourues se produisent après les repérages des balises situées de part et d'autre de la trajectoire.

5. Procédé de guidage d'un véhicule suivant la revendication 4, caractérisé en ce que les changements de rayon de courbure se produisent quand le véhicule arrive à une orientation parmi une gamme définie à l'avance.

6. Procédé de guidage d'un véhicule suivant la revendication 4, caractérisé en ce que les changements de rayon de courbure se produisent quand le véhicule arrive sur une balise (N) située sur la trajectoire (T).

**Revendications**

1. Installation de guidage d'un véhicule sur une trajectoire (T) comprenant des balises (N) ponctuelles espacées sur la trajectoire, caractérisée en ce qu'elle comprend des balises (S) d'un autre genre de part et d'autre de la trajectoire, lesdites autres balises étant placées devant des portions de changement de rayon de courbure de la trajec-

Office européen
des brevets

**RAPPORT DE RECHERCHE EUROPEENNE**

Numero de la demande

EP 92 40 0636

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 391 206 (WAGNER FÖRDERTECHNIK) * colonne 3, lignes 6-23; colonne 4, lignes 37-51; colonne 6, lignes 15-49; colonne 7, lignes 7-51; figures 4-7 * --- | 1-4 | G 05 D 1/03 |
| Y | US-A-4 322 670 (TAYLOR) * abrégé; colonne 2, ligne 1 - colonne 3, ligne 54; colonne 5, ligne 5 - colonne 6, ligne 57; figures 1-3 * --- | 1-4 | |
| A | US-A-3 668 499 (MALLOY) * abrégé; colonne 3, lignes 1-20; colonne 4, ligne 14 - colonne 5, ligne 25; figures 1,2 * --- | 1-4 | |
| A | PATENT ABSTRACTS OF JAPAN vol. 9, no. 68 (P-344)(1791), 28 mars 1985; & JP - A - 59202514 (ISHIKAWAJIMA) 16.11.1984 * en entier * --- | 1 | |
| A | PATENT ABSTRACTS OF JAPAN vol. 7, no. 212 (P-224)(1317), 20 septembre 1983; & JP - A - 58107909 (MITSUBISHI) 27.06.1983 * en entier * ----- | 1 | **DOMAINES TECHNIQUES RECHERCHES (Int. Cl.5)** G 05 D 1/00 |

Le présent rapport a été établi pour toutes les revendications

| Lieu de la recherche | Date d'achèvement de la recherche | Examinateur |
|---|---|---|
| BERLIN | 30-06-1992 | BEITNER M.J.J.B. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)